# EUROPEAN PATENT SPECIFICATION

(11) **EP 4 619 841 B1**
(45) Date of publication and mention of the grant of the patent: **02.12.2026**
(21) Application number: 23790406.5
(22) Date of filing: 12.10.2023
(51) Int. Cl.: G05D 1/00, B64U 10/00

(54) **AN UNMANNED AERIAL VEHICLE AND AGRICULTURAL VEHICLE SYSTEM AND METHODS OF OPERATING THE UNMANNED AERIAL VEHICLE AND AGRICULTURAL VEHICLE SYSTEM**
UNBEMANNTES LUFTFAHRZEUG UND LANDWIRTSCHAFTLICHES FAHRZEUGSYSTEM UND VERFAHREN ZUM BETRIEB DES UNBEMANNTEN LUFTFAHRZEUGS UND LANDWIRTSCHAFTLICHEN FAHRZEUGSYSTEM
VÉHICULE AÉRIEN SANS PILOTE ET SYSTÈME DE VÉHICULE AGRICOLE ET PROCÉDÉS DE FONCTIONNEMENT DU VÉHICULE AÉRIEN SANS PILOTE ET SYSTÈME DE VÉHICULE AGRICOLE

(30) Priority: 15.11.2022 US 202263383910 P
(43) Date of publication of application: 24.09.2025
(73) Proprietor: Agco Corporation, Duluth, Georgia 30096 (US)
(72) Inventor: ANDERSON, John D, Hesston, Kansas 67062 (US)
(74) Representative: AGCO Intellectual Property Department
(86) International application number: PCT/IB2023/060299
(87) International publication number: WO 2024/105473

(56) References cited:
- WO-A1-2022/083073
- CN-A- 114 868 527
- US-A1- 2017 369 184
- US-A1- 2021 229 566
- US-B1- 10 182 215

## Description

### FIELD

Embodiments of the present disclosure relate to unmanned aerial vehicles, mobile machines, such as self-propelled agricultural machines and similar vehicles.

### BACKGROUND

Autonomous agricultural vehicles (e.g., combine harvester) have increased the need for input data for vehicle control and safety. Additionally, agronomic decisions are demanding more and more data. Some solutions include continued integration of forward looking sensors on agricultural vehicles and the use of unmanned aerial vehicles (e.g., drones) independent of the agricultural processes. The use of drones is conventionally related to agronomy and measuring specific agronomic crop values.

US 10182215 B1 discloses an unmanned ground vehicle (UGV) for transporting one or more UAVs. The ground vehicle is equipped with landing pads which are configured to secure and release the UAVs as needed, download various data (e. g. sensor data) from the UAV and recharge or replace a battery of the UAV.

WO 2022/083073 A1 relates to a self-cleaning method for a UAV landing pad based on multi-sensor fusion. The method may use sensor signals provided by a temperature sensor, a humidity sensor, a weight sensor and a photosensitive sensor.

CN 114868527 A refers to a UAV for harvesting walnuts. The UAV may fly over a walnut tree and generate a downwash airflow configured to vibrate the walnut tree for blowing or shaking the mature walnuts to the ground.

### BRIEF SUMMARY

For improvement of the prior art, it would be beneficial to provide an improved system and method to clean landing pads for an UAV. The objective is solved by the invention which relates to a system as claimed by claim 1, a method of operating a UAV as claimed by claim 12 and a UAV management system as claimed by claim 16.

Some embodiments include a system that includes at least one UAV and a vehicle. The vehicle may include a docking assembly having a docking surface for docking the at least one UAV. The vehicle may further include a UAV management system including at least one processor, and at least one non-transitory computer-readable storage medium storing instructions thereon that, when executed by the at least one processor, cause the UAV management system to, responsive to the initiation of a landing sequence of the UAV, initiate a cleaning process to clean the docking surface of the docking assembly.

Initiating the cleaning process may include causing the at least one UAV to adjust a downward draft created by the at least one UAV over the docking surface.

Initiating the cleaning process may include initiating a sweeping process to the clean the docking surface.

Initiating the cleaning process may include causing an air source of the vehicle to blow air across the docking surface of the docking assembly.

The system may further include instructions that, when executed by the at least one processor, cause the UAV management system to, subsequent to the cleaning process, cause the at least one UAV to land on the docking surface of the docking assembly.

Analyzing the data received from the one or more sensors to determine a condition of the docking surface of the docking assembly may include analyzing the data via one or more machine learning techniques.

Receiving data from the one or more sensors may include receiving data from one or more sensors of the docking assembly.

Receiving data from the one or more sensors may include receiving data from one or more sensors of the UAV.

Receiving data from the one or more sensors may include receiving data from one or more sensors of the docking assembly and one or more sensors of UAV.

Analyzing the data received from the one or more sensors to determine a condition of the docking surface of the docking assembly may include analyzing the data to determine a percentage of the docking surface that is covered in debris.

Causing the at least one UAV to adjust a downward draft created by the at least one UAV over the docking surface may include increasing a velocity of the downward draft.

Causing the at least one UAV to adjust a downward draft created by the at least one UAV over the docking surface may include changing a direction of the downward draft.

Embodiments include a method of operating of a UAV. The method may include initiating a landing sequence of the UAV, responsive to the initiation of a landing sequence of the UAV, initiating a cleaning process to clean a docking surface of a docking assembly mounted to an agricultural vehicle, and subsequent to the cleaning process, causing the UAV to land on the docking surface of the docking assembly mounted to the agricultural vehicle.

The method may also include receiving data from one or more sensors having a viewing angle of the docking surface of the docking assembly, analyzing the data received from the one or more sensors to determine a condition of the docking surface of the docking assembly, and responsive to a determination that docking surface of the docking assembly is not substantially clear of debris, initiating the cleaning process to clean the docking surface of the docking assembly.

Initiating the cleaning process may include causing the UAV to adjust a downward draft created by the UAV over the docking surface.

Initiating the cleaning process may include causing an air source of the vehicle to blow air across the docking surface of the docking assembly.

Causing the UAV to adjust a downward draft created by the UAV over the docking surface may include increasing a velocity of the downward draft.

Causing the UAV to adjust a downward draft created by the UAV over the docking surface may include changing a direction of the downward draft.

Embodiments include UAV management system for use with an agricultural vehicle. The UAV management system may include at least one processor, and at least one non-transitory computer-readable storage medium storing instructions thereon that, when executed by the at least one processor, cause the UAV management system to, responsive to the initiation of a landing sequence of the UAV, initiate a cleaning process to clean a docking surface of a docking assembly mounted to the agricultural vehicle.

Other technical features may be readily apparent to one skilled in the art from the following figures, descriptions, and claims.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE SEVERAL VIEWS OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a side schematic view an unmanned aerial vehicle (UAV) and agricultural vehicle system according to one or more embodiments of the present disclosure;
FIG. 2 shows a side schematic view of a UAV according to one or more embodiments of the present disclosure;
FIG. 3 shows a simplified view of an imager system according to one or more embodiments of the disclosure;
FIG. 4 shows a side view of a docking assembly according to one or more embodiments of the present disclosure;
FIG. 5 shows portions of a cabin of the vehicle of FIG. 1 including one or more user interface elements allowing an operator to control the vehicle and/or the UAV according to one or more embodiments of the disclosure;
FIG. 6 shows a flowchart of a method of operating a UAV according to one or more embodiments of the disclosure;
FIG. 7 shows a flowchart of a method of operating a UAV and a docking assembly according to one or more embodiments of the disclosure;
FIG. 8 shows a flowchart of a method of operating an agricultural vehicle according to one or more embodiments of the disclosure; and
FIG. 9 is a schematic view of a controller according to embodiments of the disclosure.

### DETAILED DESCRIPTION

Illustrations presented herein are not meant to be actual views of any particular vehicle, unmanned aerial vehicle, agricultural implement, component, or system, but are merely idealized representations that are employed to describe embodiments of the disclosure. Additionally, elements common between figures may retain the same numerical designation for convenience and clarity.

Embodiments of the present disclosure include an unmanned aerial vehicle (UAV) and agricultural vehicle (e.g., combine harvester) system that includes sensors on both the UAV and the vehicle. Data collected by both the sensors of the vehicle and the sensors of the UAV (e.g., drone) many be used in combination in operating one or more vehicles (e.g., combine harvesters) performing an agricultural process (e.g., a tilling process, a planting process, a harvesting process, etc.). In some embodiments, the vehicles may operate in a fully autonomous mode, a partial autonomous mode, or a manual mode (e.g., an operator mode). In some embodiments, the UAV or a plurality of UAVs may operate ahead of the vehicle or vehicles in the field and during the agricultural process and may provide data (e.g., "look ahead" data) back to the vehicle or vehicles. In one or more embodiments, the data may include agronomic crop data, such as canopy height, canopy density, and/or measured or predictive moisture levels. The UAVs may also provide data for object avoidance, which may lead to improved route planning. Additionally, the UAVs may provide real time topography data such that the vehicle or vehicles may operate in a predictive manner as opposed to a reactive manner while performing the agricultural process. For instance, a header height control system of the vehicle may adjust a height of the header in anticipation of a determined canopy height instead of adjusting upon encountering the canopy height.

Utilizing data from both the UAVs and the vehicle (e.g., pairing the UAVs and vehicle) may enable improved measurements by utilizing data from a straight down view (e.g., data from the UAVs) in combination with data from a forward and/or a rearward view while traversing a forward path. As a result, utilizing data from both UAVs and the vehicle (e.g., pairing the UAVs and vehicle) enables improved navigation for relatively wider vehicles. In some embodiments, data from the UAVs and data from the vehicles may be synchronized through a communication network in the field (e.g., during the agricultural process in the field). Data from the UAVs may be utilized to inform operation of whichever vehicle will be performing the agricultural process at the specific location from which and/or for which the data was collected.

Embodiments include landing assemblies mounted to the vehicles enabling the UAVs to land on the vehicles while the vehicles are in motion (e.g., performing the agricultural processes). The landing assemblies enable communications between the UAVs and the vehicles and charging of the UAVs during the agricultural process. In some embodiments, any given vehicle may utilize multiple (e.g., 2 or more) UAVs to acquire at least substantially continuous coverage (e.g., an at least substantially continuous source of data) of an area to be worked during the agricultural process. The landing assemblies may include attachment/charging pads for the UAVs. Furthermore, the landing assemblies may be kept clear of debris via cleaning processes during and/or prior to landing sequences of the UAVs.

The UAV and vehicle system of the present disclosure is advantageous over conventional systems. For instance, mere sensors on vehicles are limited in scanning range, limited in mounting locations on the vehicles, and are subject to additional environmental factors, such as dust and debris. In comparison, the UAV and vehicle system of the present disclosure provides a much larger scanning range (e.g., the range of a UAV), does not require as many mounting locations on the vehicle, and can avoid some environmental factors while performing an agricultural process. Furthermore, by utilizing data acquired by the UAVs during an agricultural process being performed by the vehicle, the data is more accurate for the given agricultural process window in comparison to data acquired by UAVs operated independent of a timing of the actual agricultural process.

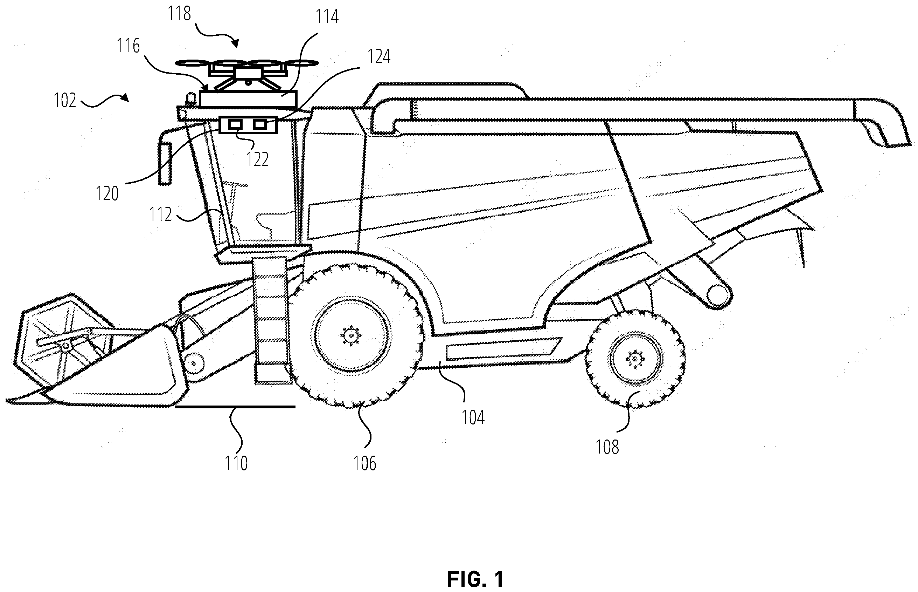

FIG. 1 shows a side view of one embodiment of an agricultural vehicle 102 according to one or more embodiments of the present disclosure. As shown in FIG. 1, in some embodiments, the vehicle 102 may include an agricultural combine harvester. However, in additional embodiments, the vehicle 102 may correspond to any other powered or unpowered agricultural machine or combination of machines (e.g., a tractor and an associated implement).

The vehicle 102 may include a frame 104 or chassis configured to support or couple to a plurality of components. For example, a pair of steerable rear wheels 108 and a pair of driven front wheels 106 may be coupled to the frame 104. In alternative embodiments, the rear wheels 108 may be driven and the front wheels 106 may be steerable. The wheels 106, 108 may, in turn, be configured to support the vehicle 102 relative to a soil surface 110 of a field and move the vehicle 102 in the direction of travel across the field. Furthermore, the frame 104 may support an operator cabin 112 having various input devices for permitting an operator to control the operation of one or more components of the vehicle 102. In addition, the vehicle 102 may include an engine and a transmission mounted on the frame 104. The transmission may be operably coupled to the engine and may provide variably adjusted gear ratios for transferring engine power to the wheels 106, 108.

The vehicle 102 may further include a docking assembly 114 (e.g., docking station) mounted to one or more portions of the vehicle 102. As is discussed in greater detail below, the docking assembly 114 may define a docking surface 116 upon which an unmanned aerial vehicle (UAV) 118 is configured to land and from which the UAV is configured to launch during operation. As shown in FIG. 1, in some embodiments, the docking assembly 114 may be mounted to a roof of the operator cabin 112. However, the docking assembly 114 may be mounted at any other suitable location on the vehicle 102, such as on a hood or a fender of the vehicle 102.

The vehicle 102 may further include a central controller 120 in, for example, the operator cabin 112 of the vehicle 102. The central controller 120 may include a UAV management system 122 for managing and/or monitoring operation of the UAV 118 and at least one input/output device 124. As a non-limiting example, the UAV management system 122 may control one or more aspects of a launching sequence and/or a landing sequence of the UAV 118. As another non-limiting example, the UAV management system 122 may control one or more aspects of flying operations and/or data-acquisition operations of the UAV 118. As is described in further detail below, the UAV management system 122 may utilize data acquired from sensors of the UAV 118 (described below) and/or sensors of the docking assembly 114 to control operation of a retractable cover of the docking assembly 114 and/or a cleaning process to clear the docking surfaces 116 of the docking assembly 114 of debris (e.g., dust) during a landing sequence of the UAV 118. Furthermore, the UAV management system 122 may utilize data acquired from sensors of the UAV 118 and/or sensors of the docking assembly 114 to provide guidance data (e.g., "look-ahead data") on an intended pathway (e.g., intended passes through a field) of the vehicle 102 during an agricultural process. For instance, the guidance data may include agronomic crop data such as canopy height and density and/or moisture data (e.g., predictive moisture levels) within the intended agricultural process. Additionally, the central controller 120 may be configured to control one or more operations and devices of the vehicle 102.

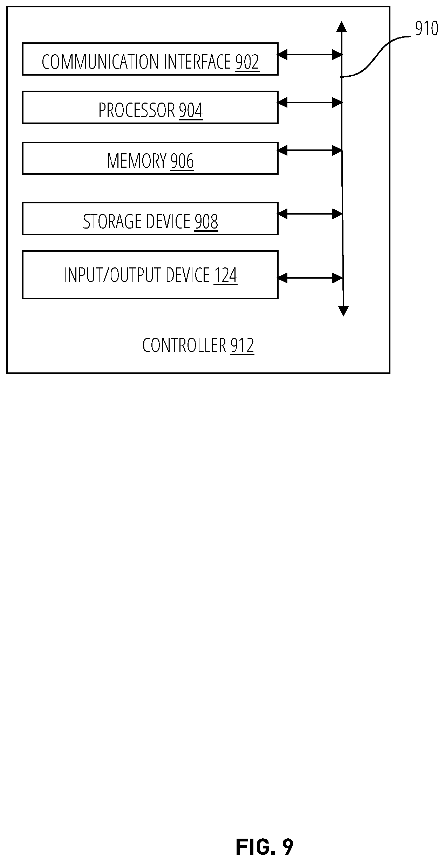

The input/output device 124 may allow an operator of the vehicle 102 to provide input to, receive output from, and otherwise transfer data to and receive data from the UAV management system 122 and/or the central controller 120. The input/output device 124 may include a mouse, a keypad or a keyboard, a joystick, a touch screen, a camera, an optical scanner, network interface, modem, other known I/O devices or a combination of such I/O interfaces. The input/output device 124 may include one or more devices for presenting outputs to an operator, including, but not limited to, a graphics engine, a display (e.g., a display screen), one or more output drivers (e.g., display drivers), one or more audio speakers, and one or more audio drivers. In certain embodiments, the input/output device 124 is configured to provide graphical data to a display for presentation to an operator. The graphical data may be representative of one or more graphical user interfaces and/or any other graphical content as may serve a particular implementation. As is described in greater detail below, the UAV management system 122 and/or the central controller 120 and the input/output device 126 may be utilized to display data regarding operation of the UAV 118 and/or guidance data to assist an operator in operating the vehicle 102 during an agricultural process. The central controller 120 is described in greater detail below in regard to FIG. 9.

Referring still to FIG. 1, while the UAV management system 122 is described as being part of the central controller 120, the disclosure is not so limited. Rather, the UAV management system 122 may be part of (e.g., operated on) another device in communication with the central controller 120. In further embodiments, the UAV management system 122 may be part of one or more servers or remote devices in communication with the central controller 120. As a non-limiting example, the vehicle 102 may be an autonomous machine, and the operator cabin 112 may be omitted. In those embodiments, the central controller 120 may operate the vehicle 102 and may receive at least some instructions from a remote operator or system via a wireless link.

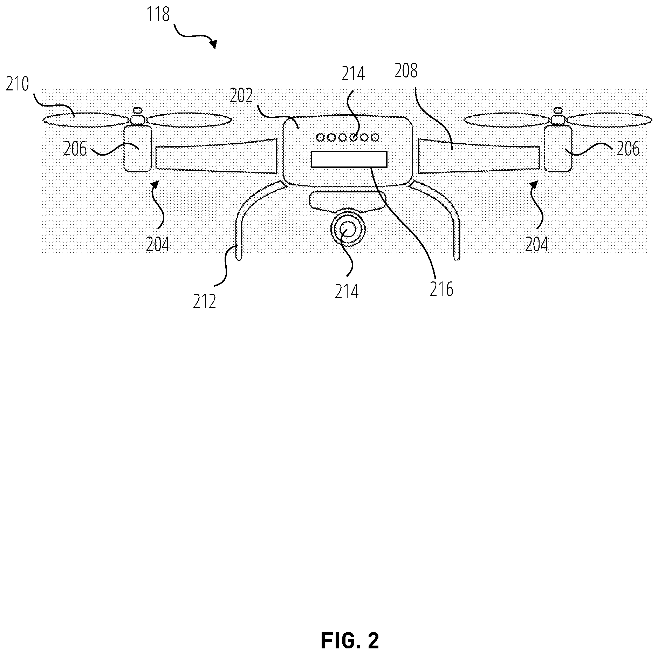

FIG. 2 shows a side schematic view of a UAV 118 according to one or more embodiments. The UAV 118 may include a frame or body 202 that supports a propulsion system 204. For example, in one embodiment, the propulsion system 204 may include a plurality of motors 206, with each motor 206 being coupled to the body 202 via a support arm 208. Each motor 206 may, in turn, be configured to rotationally drive an associated propeller 210. In some embodiments, the propulsion system 204 may include four, six, eight, or more motors 206 and associated propellers 210. For example, the UAV 118 may include a quadcopter. In additional embodiments, the UAV 118 may include any other multi-rotor aerial vehicle, such as a tricopter, hexacopter, or octocopter. In further embodiments, the UAV 118 may include a single-rotor helicopter or a fixed wing, hybrid vertical takeoff and landing aircraft.

Additionally, the UAV 118 may include a plurality of legs 212 extending from the body 202. The legs 212 may be configured to support the body 202 relative to the docking surface 116 of the docking assembly 114 when the UAV 118 lands and is situation on the docking surface 116 of the docking assembly 114. In some embodiments, the legs 212 may be telescopic or may be otherwise configured to extend and retract, thereby enabling adjustment of an elevation of the body 202 relative to the docking surface 116 and/or a top field surface to be adjusted when landed. In additional embodiments, the legs 212 may have a fixed length. In one or more embodiments, the UAV 118 may include four legs 212. In additional embodiments, the UAV 118 may include six, eight, or more legs 212.

Moreover, the UAV 118 may include a UAV controller 216 and one or more sensors 214 mounted to the body 202 of the UAV 118 and operably coupled to the UAV controller 216. In some embodiments, the UAV controller 216 may be configured to communicate wirelessly with the central controller 120 of the vehicle 102 and, as a result, the UAV management system 122. For example, in one or more embodiments, the UAV controller 216 may be configured to receive instructions and/or data from the UAV management system 122. Additionally, the UAV controller 216 may be configured to provide data (e.g., sensor data, image data, and/or operation data) to the UAV management system 122. The UAV controller 216 is described in further detail below in regard to FIG. 9.

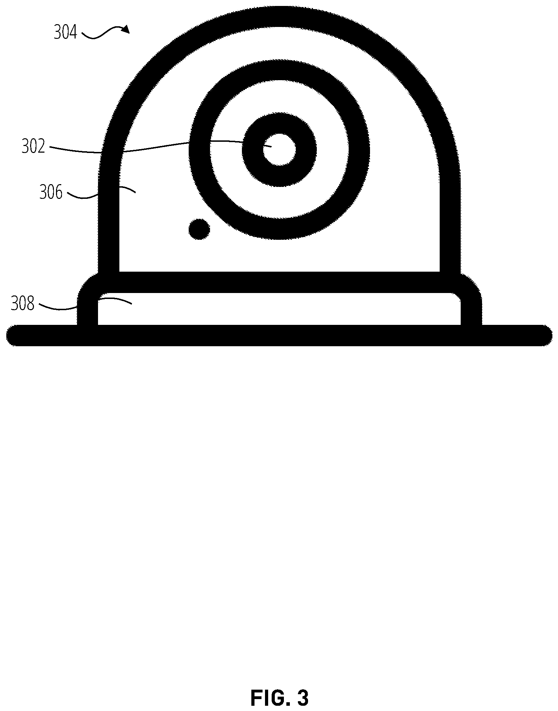

In some embodiments, the one or more sensors 214 may include an imager system 304 (FIG. 3). Referring to FIG. 2 and FIG. 3 together, in embodiments where the one or more sensors 214 include an imager system 304, the imager system 304 may include one or more lenses 302, a body 306, and one or more actuators 308. The one or more actuators 308 may facilitate manipulation of a position and a viewing angle of the one or more lenses 302 of the imager system 304. In some embodiments, the one or more actuators 308 may be capable of rotating the one or more lenses 302 about at least two axes (e.g., an X-axis and a Z-axis). The actuators 308 may include one or more mechanical/electro mechanical actuators (e.g., linear actuators and/ rotary actuators). In some embodiments, the actuators 308 may be operated and controlled by the UAV controller 216 and/or the UAV management system 122.

In some embodiments, the imager system 304 may include one or more of a 3D laser scanner (LiDAR), a 2D laser scanner (LiDAR), an ultra-sonic distance sensor, a radar sensor, a charge-couple device (CCD) sensor, a complementary metal oxide semiconductor (CMOS) sensor, a stereoscopic camera, a monoscopic camera, an infrared (IR) camera, a short-wave infrared (SWIR) camera, or a digital single-reflex camera. Furthermore, the imager system 304 may be configured to capture data including one or more of relatively high resolution color images/video, relatively high resolution infrared images/video, or light detection and ranging data. In some embodiments, the imager system 304 may be configured to capture image data at multiple focal lengths. In some embodiments, the imager system 304 may be configured to combine multiple exposures into a single high-resolution image/video. In some embodiments, imager system 304 may include multiple image sensors (e.g., cameras) with viewing angles facing different directions.

Referring again to FIG. 2, in additional embodiments, the one or more sensors 214 may include one or more of a cone penetrometer, accelerometers, tilt sensors, inertial measurement units, humidity sensors, magnetic position sensors, and any sensors conventionally mounted to a UAV for data acquisition.

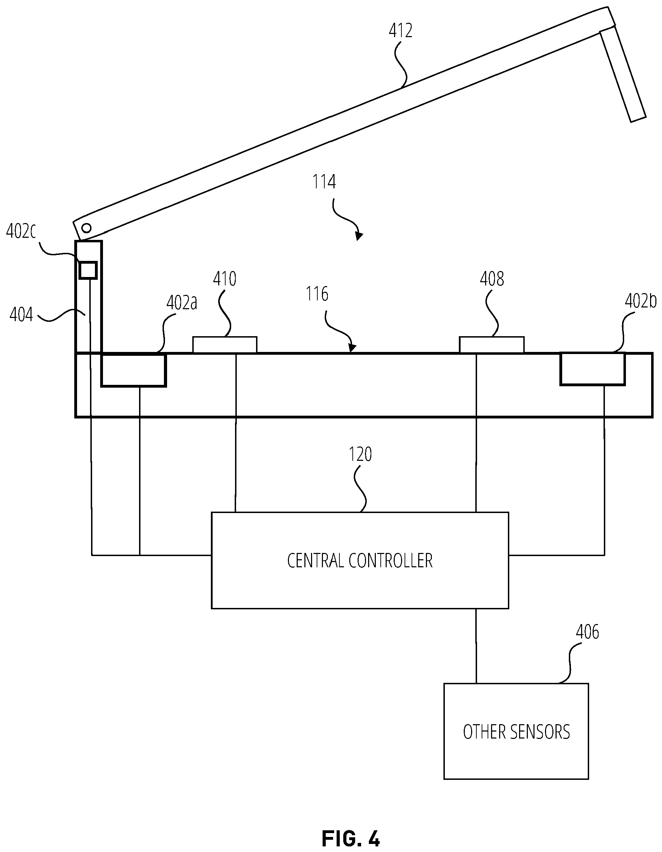

FIG. 4 shows a schematic representation of a docking assembly 114 according to one or more embodiments. As shown in FIG. 4, the docking assembly 114 may include the docking surface 116, one or more attachment/charging pads 408, and one or more sensors 402a, 402b, 402c (referred to herein cumulatively as "402a"). In some embodiments, the docking assembly 114 may optionally include a cover 412 for selectively covering the docking surface 116 of the docking assembly 114 between launching and landing sequences.

The one or more attachment/charging pads 408 may be disposed on the docking surface 116 and may protrude from or may be at least substantially flush with the docking surface 116. In some embodiments, one or more attachment/charging pads 408 may include charging contacts configured to contact associated contacts of the UAV 118 for charging a power source of the UAV 118. Additionally, the attachment/charging pads 408 may include one or more elements for securing the UAV 118 to the docking surface 116 while the UAV 118 is in a landed state. For instance, the e attachment/charging pads 408 may include any conventional elements for securing UAVs to docking surfaces (e.g., landing pads).

The one or more sensors 402a of the docking assembly 114 may be operably coupled to the central controller 120 and, as a result, the UAV management system 122 (FIG. 1). The one or more sensors 402a of the docking assembly 114 may be used in conjunction (i.e., in combination) with the one or more sensors 214 of the UAV 118 to facilitate landing sequences of the UAV 118, launching sequences UAV 118, and/or data acquisition procedures related to an agricultural process (e.g., fertilizer application, planting process, harvesting process, etc.).

In some embodiments, the one or more sensors 402a may form one or more portions of the docking surface 116. In additional embodiments, the one or more sensors 402a may be mounted above the docking surface 116. For instance, the one or more sensors 402a may be mounted to an arm member 404 of the docking assembly 114 or another portion of the vehicle 102. In some embodiments, the one or more sensors 402a may have viewing angles encompassing the docking surface 116 of the docking assembly 114. In additional embodiments, the one or more sensors 402a may have viewing angles encompassing portions of the soil surface 110 (FIG. 1) and/or other portions of the vehicle 102. In some embodiments, the central controller 120 may be in communication with other sensors 406 of the vehicle 102 (e.g., a front view camera, a rear view camera, a global positioning system ("GPS"), an accelerometer, a speedometer, etc.). For instance, the vehicle 102 may include other sensors 406 such as any of the sensors described herein. As a non-limiting example, the vehicle 102 (e.g., a combine harvester) may include other sensors 406 coupled to a tool of the vehicle 102 (e.g., a combine header), an operator cabin 112, and/or any other portion of the vehicle 102.

In one or more embodiments, the one or more sensors 402a and/or the other sensors 406 may include one or more of a 3D laser scanner (LiDAR), a 2D laser scanner (LiDAR), an ultra-sonic distance sensor, a radar sensor, a charge-couple device (CCD) sensor, a complementary metal oxide semiconductor (CMOS) sensor, a stereoscopic camera, a monoscopic camera, an infrared (IR) camera, a short-wave infrared (SWIR) camera, or a digital single-reflex camera. Furthermore, the one or more sensors 402a and/or the other sensors 406 may be configured to capture data including one or more of relatively high resolution color images/video, relatively high resolution infrared images/video, or light detection and ranging data. In some embodiments, the one or more sensors 402a and/or the other sensors 406 may be configured to capture image data at multiple focal lengths. In some embodiments, the one or more sensors 402a and/or the other sensors 406 may be configured to combine multiple exposures into a single high-resolution image/video. In some embodiments, the one or more sensors 402a and/or the other sensors 406 may include multiple image sensors (e.g., cameras) with viewing angles facing different directions.

As is described in greater detail below, the central controller 120 and/or the UAV management system 122 may utilize data received from the one or more sensors 402a of the docking assembly 114, the sensors 214 of the UAV 118, and/or the other sensors 406 of the vehicle 102 to determine a condition of the docking surface 116 of the docking assembly 114. Furthermore, based on the determined condition, the central controller 120 and/or the UAV management system 122 may cause the docking surface 116 to be cleaned and/or covered. For instance, prior to and/or during a landing sequence of the UAV 118, the central controller 120 and/or the UAV management system 122 may cause the docking surface 116 to be cleaned based on a determined condition.

In some embodiments, the cover 412 may include a hemi-spherical dome. In additional embodiments, the cover 412 may include an open rectangular prism (e.g., an open rectangular box) or an open partial-rectangular prism. Furthermore, the cover 412 may be pivotably coupled relative to the docking surface 116 such that the cover 412 can be rotated relative to the docking surface 116 to selectively expose and cover the docking surface 116. In some embodiments, actuators of the cover 412 may be operably coupled to the central controller 120 and/or the UAV management system 122, and operation of the cover 412 may be at least partially dictated by data received from the one or more sensors 402a of the docking assembly 114, the sensors 214 of the UAV 118, and/or the other sensors 406 of the vehicle 102. As another non-limiting limiting, subsequent to a launching sequence of the UAV 118, the central controller 120 and/or the UAV management system 122 may cause the cover 412 to cover the docking surface 116 of the docking assembly 114.

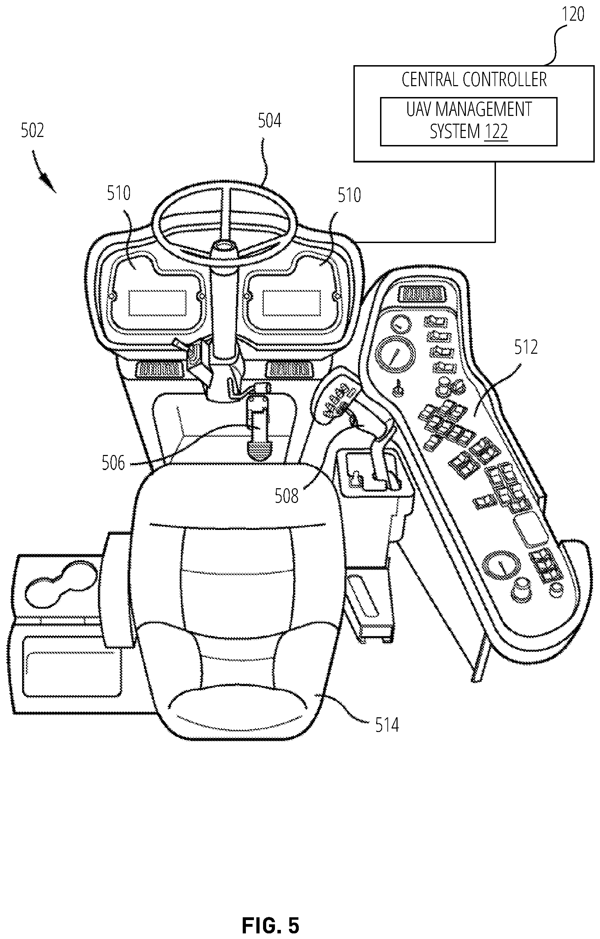

FIG. 5 shows a simplified view of an interior of an example operator cabin of a vehicle. For example, in some embodiments, the operator cabin 112 of the vehicle 102 may include the operator cabin of FIG. 5. The operator cabin 112 or "cab" is supported on the chassis. The operator cabin 112 may include a control environment 502, which may include a steering wheel 504, one or more pedals 506, a drive lever 508, one or more electronic display panels 510, and a control panel 512 including buttons, switches, levers, gauges, and/or other user interface elements. The various components of the control environment 502 enable the operator to control the functions of the vehicle 102, including driving and operating other components of the vehicle 102 (e.g., a header height). The various user interface elements are positioned around and proximate a seat 514 for easy access by an operator during operation of the vehicle 102. In some embodiments, the control environment 502 may include a touchscreen display. For example, one or both of the electronic display panels 510 may be or include a touchscreen, or a display terminal with a touchscreen may be mounted on or near the control panel 512. An orientation of elements of the operator cabin 112 may be different depending on a type of the vehicle 102. For example, the orientation of elements of the operator cabin 112 when associated with a combine harvester may be different that the orientation of the elements of the operator cabin 112 when associated with a tractor.

One or more elements of the control environment 502 may be operably coupled to the UAV management system 122 and the central controller 120. The central controller 120 and the UAV management system 122 are described in greater detail below. The UAV management system 122 and/or the central controller 120 may include software and/or hardware for analyzing data received from sensors of the UAV 118 and/or the vehicle 102 and determining conditions of an intended agricultural process and/or conditions of the docking surface 116 of the docking assembly 114 (e.g., docking station). Furthermore, the UAV management system 122 and/or central controller 120 may include software and/or hardware for providing (e.g., outputting) one or more indications of the determined conditions to an operator. As a non-limiting example, the UAV management system 122 and/or the central controller 120 may be configured to cause the one or more indications to be displayed on one or more of the display panels 510 of the operator cabin 112, as is described in greater detail below.

In some embodiments, the vehicle 102 may not include an operator cabin 112 or may include a limited operator cabin 112. As a non-limiting example, the vehicle 102 may be an autonomous machine (e.g., an autonomous combine), and the operator cabin 112 may be omitted. In such embodiments, the central controller 120 may operate the vehicle 102 and may receive at least some instructions from a remote operator and/or system via a wireless link. For example, the central controller 120 and the UAV management system 122 may be in communication with one or more central servers and/or remote devices and may receive instructions from the one or more central servers and/or remote devices. Moreover, the central controller 120 and/or the UAV management system 122 may send sensed data (e.g., image data), UAV operation data, and/or determined guidance data to the one or more central servers and/or remote devices for display to a remote operator.

Referring still to FIG. 5, while the UAV management system 122 is described as being part of the central controller 120, the disclosure is not so limited. Rather, the UAV management system 122 may be part of (e.g., operated on) another device in communication with the central controller 120. In further embodiments, the UAV management system 122 may be part of one or more servers and/or remote devices in communication with the central controller 120.

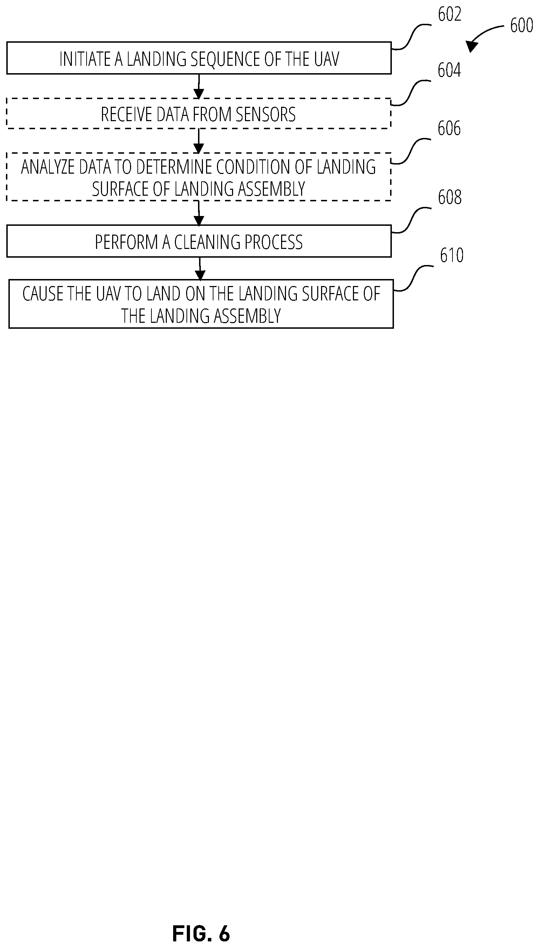

FIG. 6 shows a flowchart of a method 600 of operating a UAV 118 according to one or more embodiments. In some embodiments, the UAV controller 216, the UAV management system 122, and/or the central controller 120 may perform one or more acts of method 600. In some embodiments, the method 600 may include initiating a landing sequence of the UAV 118, as shown in act 602 of FIG. 6. For example, the UAV management system 122 may initiate the landing sequence of the UAV 118. In some embodiments, the UAV management system 122 may initiate the landing sequence of the UAV 118 responsive to one or more of the UAV 118 completing a task (e.g., a data acquisition task), the UAV 118 requiring a recharge, and/or any other reason requiring the UAV 118 to land on the docking assembly 114.

The method 600 may optionally include receiving data from at least some of the sensors 214 of the UAV 118 and/or the sensors 402a of the docking assembly 114, as shown in act 604 of FIG. 6. In some embodiments, the UAV management system 122 may receive the data from at least some of the sensors 214 of the UAV 118 and/or the sensors 402a of the docking assembly 114. In one or more embodiments, the data may include one or more of images and/or video (e.g., video data) of one or more portions of the docking surface 116 of the docking assembly 114. In some embodiments, receiving the image data from at least some of the sensors 214 of the UAV 118 and/or the sensors 402a may be in response to an initiation of the landing sequence. In some embodiments, the UAV management system 122 may receive the data via one or more of a wired connection and/or wireless connection.

Responsive to receiving the data from at least some of the sensors 214 of the UAV 118 and/or the sensors 402a of the docking assembly 114, the method 600 may optionally include analyzing the received data to determine a condition of the docking surface 116 of the docking assembly 114, as shown in act 606 of FIG. 6. In some embodiments, the UAV management system 122 may analyze the received data to determine a condition of the docking surface 116 of the docking assembly 114. In one or more embodiments, the UAV management system 122 may analyze the received data to determine whether the docking surface 116 (e.g., the attachment/charging pads 408 of the docking surface 116) of the docking assembly 114 is substantially free of debris (e.g., dust, vegetation, and/or other debris) or whether debris is present on one or more portions of the docking surface 116 of the docking assembly 114. For instance, the UAV management system 122 may analyze the received data to determine whether the docking surface 116 of the docking assembly 114 is substantially clean (e.g., substantially free of debris).

In some embodiments, the UAV management system 122 may analyze the received data via deep learning techniques to determine a condition of the docking surface 116 of the docking assembly 114. For example, the UAV management system 122 may utilize one or more of convolutional neural networks (CNNs), single shot detectors (SSDs), region-convolutional neural networks (R-CNNs), Faster R-CNN, Region-based Fully Convolutional Networks (R-FCNs) and other machine learning models to perform the product (e.g., object) detection and classification. The foregoing models may be trained according to conventional methods to perform the docking surface 116 detection, debris detection, attachment/charging pads 408 detection, and classification. In some embodiments, the UAV management system 122 may determine bounding boxes (e.g., a point, width, and height) of the identified docking surface 116, debris, and/or attachment/charging pads 408. In additional embodiments, the UAV management system 122 may perform object segmentation (e.g., object instance segmentation or sematic segmentation) to associate specific pixels of the image data within the detected docking surface 116, debris, and/or attachment/charging pads 408. In some embodiments, the UAV management system 122 may determine whether or not the attachment/charging pads 408 are substantially free of debris. In one or more embodiments, the UAV management system 122 may determine what percentage (e.g., estimate a percentage) of a surface area of the docking surface 116 and/or the attachment/charging pads 408 is covered by debris.

In one or more embodiments, the UAV management system 122 may determine that the docking surface 116 and/or the attachment/charging pads 408 are substantially free of debris (e.g., clean) if less than 50 percent, 40 percent, 30 percent, 20 percent, 10 percent, or 5 percent of the surface area of the docking surface 116 and/or the attachment/charging pads 408 is covered with debris. In some embodiments, the UAV management system 122 may determine that the docking surface 116 and/or the attachment/charging pads 408 are substantially free of debris if a sufficient amount of the docking surface 116 and/or the attachment/charging pads 408 are exposed to enable necessary contact between the attachment/charging pads 408 and associated portions of the UAV (e.g., charging contacts, attachment elements, etc.).

The method 600 may further include performing a cleaning process to clean the docking surface 116 of the docking assembly 114, as shown in act 608 of FIG. 6. For instance, the UAV management system 122 may cause the cleaning process to be performed. In some embodiments, the UAV management system 122 may cause the cleaning process to be performed responsive to a determination that the docking surface 116 and/or the attachment/charging pads 408 are not substantially free of debris. In other words, the UAV management system 122 may cause the cleaning process to be performed responsive to a determination that the docking surface 116 and/or the attachment/charging pads 408 are not sufficiently clear of debris.

In some embodiments, the cleaning process may include causing air to blow across the docking surface 116 of the docking assembly 114. In some embodiments, causing air to blow across the docking surface 116 of the docking assembly 114 may include causing air to be blown across the docking surface 116 of the docking assembly 114 from an air supply (e.g., compressed air supply) of the vehicle 102. In additional embodiments, causing air to blow across the docking surface 116 of the docking assembly 114 may include causing the UAV 118 to direct a draft of air across the docking surface 116 of the docking assembly 114. For instance, the UAV management system 122 may adjust operation of the UAV 118 to increase a velocity and/or magnitude of a downward draft of the UAV 118 (e.g., downward draft of air caused by the propulsion system 204 of UAV) and/or prolong a downward draft of the UAV 118 above the docking surface 116 of the docking assembly 114. In further embodiments, the cleaning process may include sweeping the docking surface 116 of the docking assembly 114 via a sweeping element of the docking assembly 114 and/or vehicle 102.

Referring to act 604 and act 606 of FIG. 6, in some embodiments, receiving and analyzing data from the sensors 214 of the UAV 118 and/or the sensors 402a of the docking assembly 114 may be optional. For instance, in some embodiments, a cleaning process may be perform during every landing sequence. Furthermore, in embodiments including receiving and analyzing data from the sensors 214 of the UAV 118 and/or the sensors 402a of the docking assembly 114, responsive to a determination that the docking surface 116 and/or the attachment/charging pads 408 are sufficiently clear of debris, a cleaning process may be foregone.

The method 600 may further include causing the UAV 118 to land on the docking surface 116 of the docking assembly 114. In some embodiments, the UAV management system 122 may cause the UAV 118 to land. For instance, the method 600 may include causing the UAV 118 to land via any conventional or known manner.

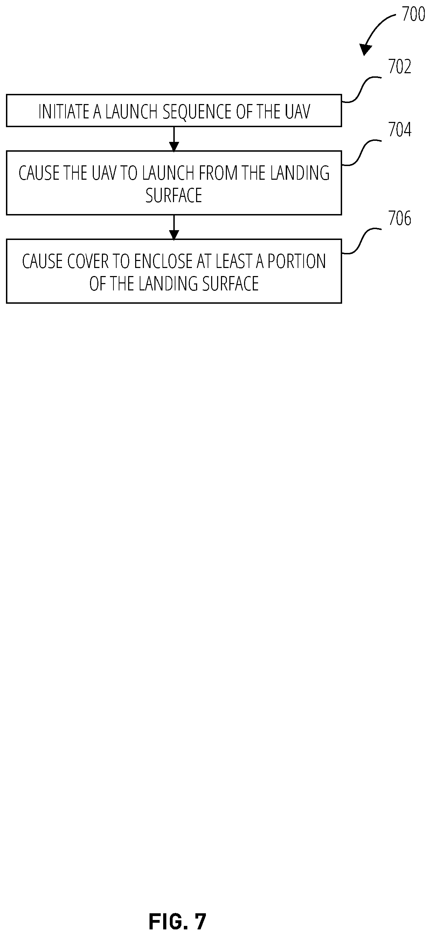

FIG. 7 shows a flowchart of a method 700 of operating a UAV 118 according to one or more embodiments. In some embodiments, the UAV controller 216, the UAV management system 122, and/or the central controller 120 may perform one or more acts of method 700. In some embodiments, the method 700 may include initiating a launching sequence of the UAV 118, as shown in act 702 of FIG. 7. For example, the UAV management system 122 may initiate the launching sequence of the UAV 118. In some embodiments, the UAV management system 122 may initiate the launching sequence of the UAV 118 responsive to receiving one or more tasks (e.g., a data acquisition task) to be completed via the UAV 118 and/or any other reason requiring the UAV 118 to launch from the docking assembly 114.

The method 700 may further include causing the UAV 118 to launch from the docking surface 116 of the docking assembly 114, as shown in act 704 of FIG. 7. For example, the method 700 may include causing the UAV 118 to launch via any conventional or known manner.

Furthermore, the method 700 may include causing the cover 412 to enclose at least a portion of the docking surface 116 of the docking assembly 114, as shown in act 706 of FIG. 7. For example, responsive the UAV 118 launching from the docking surface 116 of the docking assembly 114, the UAV management system 122 may cause the cover 412 to enclose at least a portion of the docking surface 116 of the docking assembly 114. In some embodiments, causing the cover 412 to enclose (e.g., cover) at least a portion of the docking surface 116 of the docking assembly 114 may include rotating the cover 412 (e.g., rotating the cover 412 via one or more actuators) relative to the docking surface 116 of the docking assembly 114 such that the cover 412 encloses at least a portion of the docking surface 116 of the docking assembly 114. In additional embodiments, causing the cover 412 to enclose (e.g., cover) at least a portion of the docking surface 116 of the docking assembly 114 may include causing the cover 412 to translate relative to the docking surface 116 of the docking assembly 114 such that the cover 412 encloses at least a portion of the docking surface 116 of the docking assembly 114.

Furthermore, the method 700 may include any of the acts described above in regard to method 600 and FIG. 6. For instance, subsequent to launching the UAV 118, the method 700 may include any of the acts of method 600 of FIG. 6 to land the UAV 118. Additionally, the method 700 may include uncovering the docking surface 116 of the docking assembly 114 during and/or prior to performing the acts of method 600 of FIG. 6.

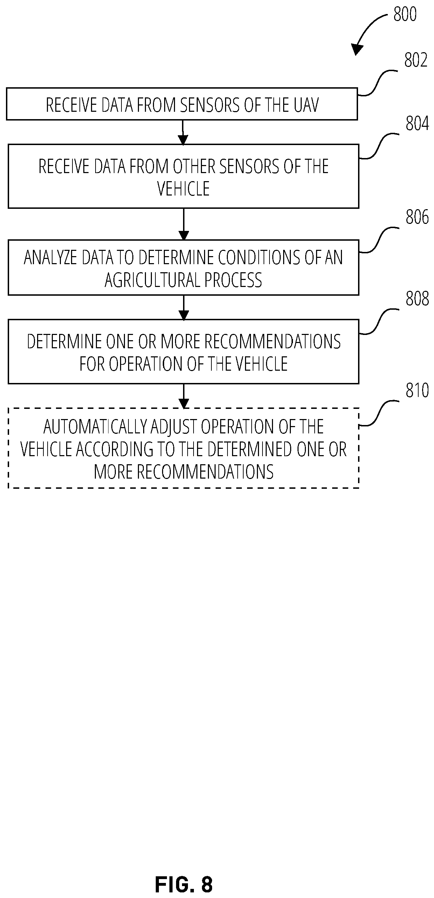

FIG. 8 shows a flowchart of a method 800 of operating a vehicle 102 according to one or more embodiments. In some embodiments, the UAV controller 216, the UAV management system 122, and/or the central controller 120 may perform one or more acts of method 800.

In some embodiments, the method 800 may include receiving data from one or more sensors 214 of one or more UAVs 118, as shown in act 802 of FIG. 8. In one or more embodiments, the UAV management system 122 and/or the central controller 120 may receive the data from at least some of the sensors 214 of the one or more UAVs 118. In one or more embodiments, the data may include one or more of images and/or video (e.g., video data) of one or more fields and/or an intended pathways of an agricultural process (e.g., fertilizer application, planting process, harvesting process, etc.) to be performed by the vehicle 102. In some embodiments, the UAV management system 122 and/or the central controller 120 may receive the data via one or more of a wired connection and/or a wireless connection.

In one or more embodiments, the method 800 may include receiving data from one or more of the other sensors 406 of the vehicle 102 and/or the sensors 402a of the docking assembly 114, as shown in act 804 of FIG. 8. In one or more embodiments, the UAV management system 122 and/or the central controller 120 may receive the data from the other sensors 406 of the vehicle 102 and/or the sensors 402a of the docking assembly 114. In some embodiments, the data may include one or more of images and/or video (e.g., video data) of one or more fields and/or the intended pathways of an agricultural process (e.g., fertilizer application, planting process, harvesting process, etc.) to be performed by the vehicle 102. In some embodiments, the data may include data regarding operation of the vehicle 102 (e.g., GPS data, speed of the vehicle 102, a current direction of movement of the vehicle 102, or any other data regarding operation of the vehicle 102). In some embodiments, the UAV management system 122 and/or the central controller 120 may receive the data via one or more of a wired connection and/or a wireless connection.

The method 800 may further include analyzing the received data to determine conditions of an intended agricultural process, as shown in act 806 of FIG. 8. In some embodiments, the UAV management system 122 and/or the central controller 120 may analyze the received data to determine conditions of the intended agricultural process. In one or more embodiments, the UAV management system 122 and/or the central controller 120 may analyze the received data via any of the manners described above in regard to act 606 of FIG. 6.

In some embodiments, analyzing the received data and determining conditions of the intended agricultural process may include determining guidance data. Determining the guidance data may include determining agronomic crop data (e.g., canopy height, canopy density, predictive and/or measured or predictive moisture levels) for the intended agricultural process, determining topography data for the intended agricultural process, and/or detecting objects (e.g., objects to avoid) within the intended agricultural process.

In one or more embodiments, analyzing the received data and determining conditions of the intended agricultural process may include utilizing data from both the sensors 214 of the one or more UAVs 118 and the sensors 402a of the vehicle 102. For example, the UAV management system 122 and/or the central controller 120 may utilize a combination of data from multiple sources to determine conditions of the intended agricultural process.

Based at least partially on the determined conditions of the intended agricultural process, the method 800 may include determining one or more recommendations for operation of the vehicle 102 during and/or prior to performing the agricultural process, as shown in act 808 of FIG. 8. For example, the UAV management system 122 and/or the central controller 120 may determine one or more recommendations for operation of the vehicle 102 during and/or prior to performing the agricultural process. In some embodiments, the one or more recommendations for operation may include one or more of a recommended pathway to travel, a recommended speed, and/or recommended parameters for the agricultural process (e.g., recommended header height). For example, responsive to identifying an object (e.g., a large boulder) in an intended pathway of the vehicle 102, the UAV management system 122 may determine a recommendation to adjust the intended pathway of the vehicle 102 to avoid the object.

In some embodiments, determining one or more recommendations for operation of the vehicle 102 during and/or prior to performing the agricultural process may include providing the one or more recommendations to an operator. For example, the UAV management system 122 and/or the central controller 120 may provide the one or more recommendations via the one or more display panels 510 of the operator cabin 112.

In one or more embodiments, the method 800 may optionally include automatically adjusting operation of the vehicle 102 according to the determined one or more recommendations, as shown in act 810 of FIG. 8. For example, the central controller 120 may adjust operation of the vehicle 102 according to the one or more determined recommendations. In some embodiments, the central controller 120 may recommend an adjustment to operation of the vehicle 102 that requires an operator to approve the recommendation. The recommendation may be displayed on one or more of the display panels 510 of the operator cabin 112 and may require operator input to approve.

Referring still to FIG. 1 through FIG. 8 together, the vehicle 102 and the UAV management system 122 of the disclosure may provide advantages in performing agricultural processes over conventional vehicles 102.

Utilizing data from both the UAVs 118 and the vehicle 102 (e.g., pairing the UAVs 118 and vehicle 102) may enable improved measurements by utilizing data from a straight down view (e.g., data from the UAVs 118) in combination with data from a forward and/or a rearward view while traversing a forward path. As a result, utilizing data from both UAVs 118 and the vehicle 102 (e.g., pairing the UAVs 118 and vehicle 102) enables improved navigation for relatively wider vehicles. For example, the vehicle 102 and the UAV management system 122 of the disclosure may synchronize information (e.g., data) through a communication network in the field (e.g., during an agricultural process), and the UAVs 118 may provide information into the communication network for whichever vehicle 102 is performing the agricultural process for which the data is relevant. For example, the UAVs 118 may provide real-time data (e.g., topography data) that may enable the vehicle 102 to optimize the agricultural process (e.g., pathways to perform the agricultural process). For instance, the combined data from the UAVs 118 and the vehicle 102 may enable the vehicle 102 to make adjustments to the agricultural process (e.g., header height) in a predictive manner in comparison to a reactive manner.

FIG. 9 is a schematic view of a controller 912 according to embodiments of the disclosure. The central controller 120, the UAV controller 216, and/or the UAV management system 122 may include one or more of the controllers 912 of FIG. 9. The controller 912 may include a communication interface 902, a processor 904, a memory 906, a storage device 908, an input/output device 124, and a bus 910.

In some embodiments, the processor 904 includes hardware for executing instructions, such as those making up a computer program. As an example, and not by way of limitation, to execute instructions, the processor 904 may retrieve (or fetch) the instructions from an internal register, an internal cache, the memory 906, or the storage device 908 and decode and execute them. In some embodiments, the processor 904 may include one or more internal caches for data, instructions, or addresses. As an example, and not by way of limitation, the processor 904 may include one or more instruction caches, one or more data caches, and one or more translation look aside buffers (TLBs). Instructions in the instruction caches may be copies of instructions in the memory 906 or the storage device 908.

The memory 906 may be coupled to the processor 904. The memory 906 may be used for storing data, metadata, and programs for execution by the processor(s). The memory 906 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 906 may be internal or distributed memory.

The storage device 908 may include storage for storing data or instructions. As an example, and not by way of limitation, storage device 908 can comprise a non-transitory storage medium described above. The storage device 908 may include a hard disk drive (HDD), Flash memory, an optical disc, a magneto-optical disc, magnetic tape, or a Universal Serial Bus (USB) drive or a combination of two or more of these. The storage device 908 may include removable or non-removable (or fixed) media, where appropriate. The storage device 908 may be internal or external to the computing storage device 908. In one or more embodiments, the storage device 908 is non-volatile, solid-state memory. In other embodiments, the storage device 908 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The input/output device 124 may allow an operator of the vehicle 102 to provide input to, receive output from, and otherwise transfer data to and receive data from controller 912. The input/output device 124 may include a mouse, a keypad or a keyboard, a joystick, a touch screen, a camera, an optical scanner, network interface, modem, other known I/O devices, or a combination of such I/O interfaces. The input/output device 124 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 124 is configured to provide graphical data to a display for presentation to an operator. For instance, the input/output device 124 may include the display panel 510 of the operator cabin 112. The graphical data may be representative of one or more graphical user interfaces and/or any other graphical content as may serve a particular implementation. As is described above, the controller 912 and the input/output device 124 may be utilized to display data related to the UAV management system 122 and provide (e.g., display) recommendations to an operator of the vehicle 102.

The communication interface 902 can include hardware, software, or both. The communication interface 902 may provide one or more interfaces for communication (such as, for example, packet-based communication) between the controller 912 and one or more other computing devices or networks (e.g., a server). As an example, and not by way of limitation, the communication interface 902 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 910 (e.g., a Controller Area Network (CAN) bus) may include hardware, software, or both that couples components of controller 912 to each other and to external components.

## Claims

1. A system, comprising:
at least one UAV (118); and
a vehicle (102) comprising:
a docking assembly (114) having a docking surface (116) for docking the at least one UAV (118); and
a UAV management system (122) comprising:
at least one processor (904); and
at least one non-transitory computer-readable storage medium storing instructions thereon;
**characterized in that**,
when executed by the at least one processor (904), cause the UAV management system (122) to, responsive to the initiation of a landing sequence of the at least one UAV (118) and a determination that docking surface (116) of the docking assembly (114) is not substantially clear of debris, initiate a cleaning process to clean the docking surface (116) of the docking assembly (114);
receive data from one or more sensors having a viewing angle of the docking surface (116) of the docking assembly (114); and
analyze the data received from the one or more sensors to determine a condition of the docking surface (116) of the docking assembly (114) via one or more machine learning techniques;
wherein initiating the cleaning process comprises causing the at least one UAV (118) to adjust a downward draft of air created by the at least one UAV (118) over the docking surface (116).

2. The system of claim 1, wherein receiving data from the one or more sensors comprises receiving data from one or more sensors of the docking assembly (114).

3. The system of claim 1, wherein receiving data from the one or more sensors comprises receiving data from one or more sensors of the UAV (118).

4. The system of claim 1, wherein receiving data from the one or more sensors comprises receiving data from one or more sensors of the docking assembly (114) and one or more sensors of UAV (118).

5. The system of any one of claims 1 to 4, wherein analyzing the data received from the one or more sensors to determine a condition of the docking surface (116) of the docking assembly (114) comprises analyzing the data to determine a percentage of the docking surface (116) that is covered in debris.

6. The system of any one of the preceding claims , wherein causing the at least one UAV (118) to adjust the downward draft of air created by the at least one UAV (118) over the docking surface (116) comprises increasing a velocity of the downward draft of air.

7. The system of any one of the preceding claims , wherein causing the at least one UAV (118) to adjust a downward draft of air created by the at least one UAV (118) over the docking surface (116) comprises changing a direction of the downward draft of air.

8. The system of any one of claims 1 to 5, wherein initiating the cleaning process comprises initiating a sweeping process to the clean the docking surface (116).

9. The system of any one of claims 1 to 5, wherein initiating the cleaning process comprises causing an air source of the vehicle (102) to blow air across the docking surface (116) of the docking assembly (114).

10. The system of any one of claims 1 to 9, further comprising instructions that, when executed by the at least one processor (904), cause the UAV management system (122) to, subsequent to the cleaning process, cause the at least one UAV (118) to land on the docking surface (116) of the docking assembly (114).

11. A method of operating of a UAV (118), the method comprising:
initiating a landing sequence of the UAV (118);
**characterized by**
responsive to the initiation of a landing sequence of the UAV (118) and a determination that docking surface (116) of the docking assembly (114) is not substantially clear of debris, initiating a cleaning process to clean a docking surface (116) of a docking assembly (114) mounted to an agricultural vehicle (102); and
subsequent to the cleaning process, causing the UAV (118) to land on the docking surface (116) of the docking assembly (114) mounted to the agricultural vehicle (102);
receiving data from one or more sensors having a viewing angle of the docking surface (116) of the docking assembly (114); and
analyzing the data received from the one or more sensors to determine a condition of the docking surface (116) of the docking assembly (114) via one or more machine learning techniques;
wherein initiating the cleaning process comprises causing the UAV (118) to adjust a downward draft of air created by the UAV (118) over the docking surface (116).

12. The method of claim 11, wherein causing the UAV (118) to adjust the downward draft of air created by the UAV (118) over the docking surface (116) comprises increasing a velocity of the downward draft of air.

13. The method of claim 11 or 12, wherein causing the UAV (118) to adjust a downward draft of air created by the UAV (118) over the docking surface (116) comprises changing a direction of the downward draft of air.

14. The method of claim 11, wherein initiating the cleaning process comprises causing an air source of the vehicle (102) to blow air across the docking surface (116) of the docking assembly (114).

15. A UAV management system (122) for use with an agricultural vehicle (102), the UAV management system (122) comprising:
at least one processor (904); and
at least one non-transitory computer-readable storage medium storing instructions thereon;
**characterized in that**,
when executed by the at least one processor (904), cause the UAV management system (122) to, responsive to the initiation of a landing sequence of the UAV (118) and a determination that docking surface (116) of the docking assembly (114) is not substantially clear of debris, initiate a cleaning process to clean a docking surface (116) of a docking assembly (114) mounted to the agricultural vehicle (102);
receiving data from one or more sensors having a viewing angle of the docking surface (116) of the docking assembly (114); and
analyzing the data received from the one or more sensors to determine a condition of the docking surface (116) of the docking assembly (114) via one or more machine learning techniques; wherein
initiating the cleaning process comprises causing the at least one UAV (118) to adjust a downward draft of air created by the at least one UAV (118) over the docking surface (116).

## Patentansprüche

1. System, umfassend:
mindestens ein UAV (118); und
ein Fahrzeug (102), umfassend:
eine Andockbaugruppe (114) mit einer Andockfläche (116) zum Andocken des mindestens einen UAV (118); und
ein UAV-Verwaltungssystem (122), umfassend:
mindestens einen Prozessor (904); und
mindestens ein nichtflüchtiges computerlesbares Speichermedium, das Anweisungen darauf speichert;
**dadurch gekennzeichnet, dass**
sie bei Ausführung durch den mindestens einen Prozessor (904) das UAV-Verwaltungssystem (122) veranlassen, in Reaktion auf die Initiierung einer Landesequenz des mindestens einen UAV (118) und eine Bestimmung, dass die Andockfläche (116) der Andockbaugruppe (114) nicht im Wesentlichen frei von Verunreinigungen ist, einen Reinigungsprozess zum Reinigen der Andockfläche (116) der Andockbaugruppe (114) zu initiieren;
Empfangen von Daten von einem oder mehreren Sensoren mit einem Blickwinkel auf die Andockfläche (116) der Andockbaugruppe (114); und
Analysieren der von dem einen oder den mehreren Sensoren empfangenen Daten, um einen Zustand der Andockfläche (116) der Andockbaugruppe (114) zu bestimmen, über eine oder mehrere Techniken für maschinelles Lernen;
wobei das Initiieren des Reinigungsprozesses Veranlassen des mindestens einen UAV (118) umfasst, einen nach unten gerichteten Luftzug, der von dem mindestens eine UAV (118) erzeugt wird, über die Andockfläche (116) anzupassen.

2. System nach Anspruch 1, wobei das Empfangen von Daten von dem einen oder den mehreren Sensoren Empfangen von Daten von einem oder mehreren Sensoren der Andockbaugruppe (114) umfasst.

3. System nach Anspruch 1, wobei das Empfangen von Daten von dem einen oder den mehreren Sensoren Empfangen von Daten von einem oder mehreren Sensoren des UAV (118) umfasst.

4. System nach Anspruch 1, wobei das Empfangen von Daten von dem einen oder den mehreren Sensoren Empfangen von Daten von einem oder mehreren Sensoren der Andockbaugruppe (114) und einem oder mehreren Sensoren des UAV (118) umfasst.

5. System nach einem der Ansprüche 1 bis 4, wobei das Analysieren der von dem einen oder den mehreren Sensoren empfangenen Daten, um einen Zustand der Andockfläche (116) der Andockbaugruppe (114) zu bestimmen, Analysieren der Daten umfasst, um einen Prozentsatz der Andockfläche (116) zu bestimmen, der mit Verunreinigungen bedeckt ist.

6. System nach einem der vorhergehenden Ansprüche, wobei das Veranlassen des mindestens einen UAV (118), den nach unten gerichteten Luftzug, der von dem mindestens eine UAV (118) erzeugt wird, über die Andockfläche (116) anzupassen, Erhöhen einer Geschwindigkeit des nach unten gerichteten Luftzugs umfasst.

7. System nach einem der vorhergehenden Ansprüche, wobei das Veranlassen des mindestens einen UAV (118), einen nach unten gerichteten Luftzug, der von dem mindestens eine UAV (118) erzeugt wird, über die Andockfläche (116) anzupassen, Ändern einer Richtung des nach unten gerichteten Luftzugs umfasst.

8. System nach einem der Ansprüche 1 bis 5, wobei das Initiieren des Reinigungsprozesses das Initiieren eines Kehrprozesses zum Reinigen der Andockfläche (116) umfasst.

9. System nach einem der Ansprüche 1 bis 5, wobei das Initiieren des Reinigungsprozesses Veranlassen einer Luftquelle des Fahrzeugs (102) umfasst, Luft über die Andockfläche (116) der Andockbaugruppe (114) zu blasen.

10. System nach einem der Ansprüche 1 bis 9, ferner umfassend Anweisungen, die, wenn sie von dem mindestens einen Prozessor (904) ausgeführt werden, das UAV-Verwaltungssystem (122) nach dem Reinigungsprozess veranlassen, das mindestens eine UAV (118) auf der Andockfläche (116) der Andockbaugruppe (114) zu landen.

11. Verfahren zum Betreiben eines UAV (118), wobei das Verfahren Folgendes umfasst: Initiieren einer Landesequenz des UAV (118);
**gekennzeichnet durch**
Initiieren eines Reinigungsprozesses zum Reinigen einer Andockfläche (116) einer Andockbaugruppe (114), die an einem landwirtschaftlichen Fahrzeug (102) montiert ist, in Reaktion auf die Initiierung einer Landesequenz des UAV (118) und eine Bestimmung, dass die Andockfläche (116) der Andockbaugruppe (114) nicht im Wesentlichen frei von Verunreinigungen ist; und
Veranlassen des UAV (118) nach dem Reinigungsprozess, auf der Andockfläche (116) der Andockbaugruppe (114) zu landen, die an dem landwirtschaftlichen Fahrzeug (102) montiert ist;
Empfangen von Daten von einem oder mehreren Sensoren mit einem Blickwinkel auf die Andockfläche (116) der Andockbaugruppe (114); und
Analysieren der von dem einen oder den mehreren Sensoren empfangenen Daten, um einen Zustand der Andockfläche (116) der Andockbaugruppe (114) zu bestimmen, über eine oder mehrere Techniken für maschinelles Lernen;
wobei das Initiieren des Reinigungsprozesses Veranlassen des UAV (118) umfasst, einen nach unten gerichteten Luftzug, der von dem UAV (118) erzeugt wird, über die Andockfläche (116) anzupassen.

12. Verfahren nach Anspruch 11, wobei das Veranlassen des UAV (118), den nach unten gerichteten Luftzug, der von dem UAV (118) erzeugt wird, über die Andockfläche (116) anzupassen, Erhöhen einer Geschwindigkeit des nach unten gerichteten Luftzugs umfasst.

13. Verfahren nach Anspruch 11 oder 12, wobei das Veranlassen des UAV (118), einen nach unten gerichteten Luftzug, der von dem UAV (118) erzeugt wird, über die Andockfläche (116) anzupassen, Ändern einer Richtung des nach unten gerichteten Luftzugs umfasst.

14. Verfahren nach Anspruch 11, wobei das Initiieren des Reinigungsprozesses Veranlassen einer Luftquelle des Fahrzeugs (102) umfasst, Luft über die Andockfläche (116) der Andockbaugruppe (114) zu blasen.

15. UAV-Verwaltungssystem (122) zur Verwendung mit einem landwirtschaftlichen Fahrzeug (102), wobei das UAV-Verwaltungssystem (122) Folgendes umfasst:
mindestens einen Prozessor (904); und
mindestens ein nichtflüchtiges computerlesbares Speicherungsmedium, das Anweisungen darauf speichert;
**dadurch gekennzeichnet, dass**
sie bei Ausführung durch den mindestens einen Prozessor (904) das UAV-Verwaltungssystem (122) veranlassen, in Reaktion auf die Initiierung einer Landesequenz des UAV (118) und eine Bestimmung, dass die Andockfläche (116) der Andockbaugruppe (114) nicht im Wesentlichen frei von Verunreinigungen ist, einen Reinigungsprozess zum Reinigen einer Andockfläche (116) einer Andockbaugruppe (114) zu initiieren, die an dem landwirtschaftlichen Fahrzeug (102) montiert ist;
Empfangen von Daten von einem oder mehreren Sensoren mit einem Blickwinkel auf die Andockfläche (116) der Andockbaugruppe (114); und
Analysieren der von dem einen oder den mehreren Sensoren empfangenen Daten, um einen Zustand der Andockfläche (116) der Andockbaugruppe (114) zu bestimmen, über eine oder mehrere Techniken für maschinelles Lernen; wobei
das Initiieren des Reinigungsprozesses Veranlassen des mindestens einen UAV (118) umfasst, einen nach unten gerichteten Luftzug, der von dem mindestens eine UAV (118) erzeugt wird, über die Andockfläche (116) anzupassen.

## Revendications

1. Système comprenant :
au moins un UAV (118) ; et
un véhicule (102) comprenant :
un ensemble d'amarrage (114) comprenant une surface d'amarrage (116) pour amarrer l'au moins un UAV (118) ; et
un système de gestion d'UAV (122) comprenant :
au moins un processeur (904) ; et
au moins un support de stockage non transitoire lisible par ordinateur stockant des instructions ;
**caractérisées en ce que**,
lorsqu'elles sont exécutées par l'au moins un processeur (904), elles amènent le système de gestion d'UAV (122), en réponse au déclenchement d'une séquence d'atterrissage de l'au moins un UAV (118) et à la détermination que la surface d'amarrage (116) de l'ensemble d'amarrage (114) n'est pas sensiblement exempte de débris, à initier un processus de nettoyage pour nettoyer la surface d'amarrage (116) de l'ensemble d'amarrage (114) ;
recevoir des données en provenance d'un ou de plusieurs capteurs présentant un certain angle de vision de la surface d'amarrage (116) de l'ensemble d'amarrage (114) ; et
analyser les données reçues des un ou plusieurs capteurs pour déterminer un état de la surface d'amarrage (116) de l'ensemble d'amarrage (114) par l'intermédiaire d'une ou plusieurs techniques d'apprentissage machine ;
où le lancement du processus de nettoyage comprend d'amener l'au moins un UAV (118) à ajuster un tirage d'air vers le bas créé par l'au moins un UAV (118) sur la surface d'amarrage (116).

2. Système selon la revendication 1, dans lequel la réception de données en provenance des un ou plusieurs capteurs comprend de recevoir des données en provenance d'un ou plusieurs capteurs de l'ensemble d'amarrage (114).

3. Système selon la revendication 1, dans lequel la réception de données en provenance des un ou plusieurs capteurs comprend de recevoir des données en provenance d'un ou plusieurs capteurs de l'UAV (118).

4. Système selon la revendication 1, dans lequel la réception de données en provenance des un ou plusieurs capteurs comprend de recevoir des données en provenance d'un ou plusieurs capteurs de l'ensemble d'amarrage (114) et d'un ou plusieurs capteurs de l'UAV (118).

5. Système selon l'une quelconque des revendications 1 à 4, dans lequel l'analyse des données reçues des un ou plusieurs capteurs pour déterminer un état de la surface d'amarrage (116) de l'ensemble d'amarrage (114) comprend d'analyser les données pour déterminer un pourcentage de la surface d'amarrage (116) qui est recouvert de débris.

6. Système selon l'une quelconque des revendications précédentes, dans lequel amener l'au moins un UAV (118) à ajuster le tirage d'air vers le bas créé par l'au moins un UAV (118) sur la surface d'amarrage (116) comprend d'augmenter la vitesse du tirage d'air vers le bas.

7. Système selon l'une quelconque des revendications précédentes, dans lequel amener l'au moins un UAV (118) à ajuster un tirage d'air vers le bas créé par l'au moins un UAV (118) sur la surface d'amarrage (116) comprend de changer la direction du tirage d'air vers le bas.

8. Système selon l'une quelconque des revendications 1 à 5, dans lequel le lancement du processus de nettoyage comprend de lancer un processus de balayage pour nettoyer la surface d'amarrage (116).

9. Système selon l'une quelconque des revendications 1 à 5, dans lequel le lancement du processus de nettoyage comprend d'amener une source d'air du véhicule (102) à souffler de l'air à travers la surface d'amarrage (116) de l'ensemble d'amarrage (114).

10. Système selon l'une quelconque des revendications 1 à 9, comprenant en outre des instructions qui, lorsqu'elles sont exécutées par l'au moins un processeur (904), amènent le système de gestion d'UAV (122), après le processus de nettoyage, à amener l'au moins un UAV (118) à atterrir sur la surface d'amarrage (116) de l'ensemble d'amarrage (114).

11. Procédé de fonctionnement d'un UAV (118), le procédé comprenant d'initier une séquence d'atterrissage de l'UAV (118) ;
**caractérisé par** les étapes suivantes :
en réponse au lancement d'une séquence d'atterrissage de l'UAV (118) et à la détermination que la surface d'amarrage (116) de l'ensemble d'amarrage (114) n'est pas sensiblement exempte de débris, initier un processus de nettoyage pour nettoyer la surface d'amarrage (116) d'un ensemble d'amarrage (114) monté sur un véhicule agricole (102) ; et
suite au processus de nettoyage, faire atterrir l'UAV (118) sur la surface d'amarrage (116) de l'ensemble d'amarrage (114) monté sur le véhicule agricole (102) ;
recevoir des données en provenance d'un ou de plusieurs capteurs présentant un certain angle de vision de la surface d'amarrage (116) de l'ensemble d'amarrage (114) ; et
analyser les données reçues des un ou plusieurs capteurs pour déterminer un état de la surface d'amarrage (116) de l'ensemble d'amarrage (114) par l'intermédiaire d'une ou plusieurs techniques d'apprentissage machine ;
où le lancement du processus de nettoyage comprend d'amener l'UAV (118) à ajuster un tirage d'air vers le bas créé par l'UAV (118) sur la surface d'amarrage (116).

12. Procédé selon la revendication 11, dans lequel amener l'UAV (118) à ajuster le tirage d'air vers le bas créé par l'UAV (118) sur la surface d'amarrage (116) comprend d'augmenter la vitesse du tirage d'air vers le bas.

13. Procédé selon la revendication 11 ou la revendication 12, dans lequel amener l'UAV (118) à ajuster le tirage d'air vers le bas créé par l'UAV (118) sur la surface d'amarrage (116) comprend de changer la direction du tirage d'air vers le bas.

14. Procédé selon la revendication 11, dans lequel le lancement du processus de nettoyage comprend d'amener une source d'air du véhicule (102) à souffler de l'air à travers la surface d'amarrage (116) de l'ensemble d'amarrage (114).

15. Système de gestion d'UAV (122) destiné à être utilisé avec un véhicule agricole (102), le système de gestion d'UAV (122) comprenant :
au moins un processeur (904) ; et
au moins un support de stockage non transitoire lisible par ordinateur stockant des instructions ; **caractérisées en ce que**
lorsqu'elles sont exécutées par l'au moins un processeur (904), elles amènent le système de gestion d'UAV (122), en réponse au déclenchement d'une séquence d'atterrissage de l'UAV (118) et à la détermination que la surface d'amarrage (116) de l'ensemble d'amarrage (114) n'est pas sensiblement exempte de débris, à initier un processus de nettoyage pour nettoyer une surface d'amarrage (116) d'un ensemble d'amarrage (114) monté sur le véhicule agricole (102) ;
recevoir des données en provenance d'un ou de plusieurs capteurs présentant un certain angle de vision de la surface d'amarrage (116) de l'ensemble d'amarrage (114) ; et
analyser les données reçues des un ou plusieurs capteurs pour déterminer un état de la surface d'amarrage (116) de l'ensemble d'amarrage (114) par l'intermédiaire d'une ou plusieurs techniques d'apprentissage machine ; où
le lancement du processus de nettoyage comprend d'amener l'au moins un UAV (118) à ajuster un tirage d'air vers le bas créé par l'au moins un UAV (118) sur la surface d'amarrage (116).
